# EUROPEAN PATENT SPECIFICATION

(11) **EP 1 169 859 B1**
(45) Date of publication and mention of the grant of the patent: **25.04.2007**
(21) Application number: 01905539.1
(22) Date of filing: 12.02.2001
(51) Int. Cl.: H04N 7/173

(54) **SYSTEM FOR THE DISPLAY OF SELECTED IMAGES AT SELECTED TIMES USING AN AUTONOMOUS DISTRIBUTION SYSTEM**
SYSTEM ZUR ANZEIGE AUSGEWÄHLTER BILDER ZU VORBESTIMMTEN ZEITEN UNTER VERWENDUNG EINES AUTONOMEN VERTEILSYSTEMS
SYSTEME PERMETTANT D'AFFICHER DES IMAGES CHOISIES A DES MOMENTS CHOISIS GRACE A UN SYSTEME DE DISTRIBUTION AUTONOME

(30) Priority: 11.02.2000 CA 2298358
(43) Date of publication of application: 09.01.2002
(73) Proprietor: PIXNET INC., Montreal, Quebec, H2X 2V1 (CA)
(72) Inventor: HOOPER, Mark, Edmund, Pointe-Claire, Quebec H9S 4K6 (CA); LANGLOIS, Claire, Anjou, Quebec H1J 2T9 (CA); CLOUTIER, François, Montreal, Quebec H2B 2E7 (CA)
(74) Representative: Görz, Ingo
(86) International application number: PCT/CA2001/000166
(87) International publication number: WO 2001/060069

(56) References cited:
- EP-A- 0 967 804
- WO-A-00/29969
- WO-A-97/12486
- US-A- 5 335 081
- US-A- 5 661 516
- US-A- 5 819 092
- US-A- 5 937 392

## Description

### BACKGROUND OF THE INVENTION

### ● Field of the Invention

This invention relates to a method for the remote display of selected images at selected times and to an Autonomous Distribution System (ADS) and components thereof used with such method. This method and system offer an end-to-end solution for advertisers, retailers, television networks and other information providers wishing to access, via geographic, demographic and/or other selectors, a diverse network of remotely located electronic multimedia displays of varying format and capacity.

### ● Description of Prior Art

Geographic, video and similar display systems are known in the art and are often used for advertising and information presentation. Multiple display presentation systems having a set of displays for jointly reproducing, either in still or continuous motion, successive sets of correlated images according to a desired and modifiable presentation program are known. An example of such system is shown in US patent 5,335,081 (Yamaguchi et al.) which relates to a visual presentation system having a set of display devices for concurrent reproduction of correlated visual images prerecorded on record media such as video disks. This system is described as lending itself to use for the commercial publicity of new products and processes, the introduction of business corporations and other institutes, the disclosure of scientific and technological theories and findings, and a variety of other presentations addressed to limited local audiences. By contrast, the instant invention is destined to distributed group audiences.

US Patents 5,488,385 (Singhal et al.), 5,692,330 (Anderson), 5,694,141 (Chee), 5,933,154 (Howard et al.), 5,361,078 (Caine), 4,866,530 (Kalua), 4,800,376 (Suga et al.) and 4,760,388 (Tatsumi et al.) also describe similar systems.

US Patent 5,819,092 (Ferguson et al.) describes online system development tools that include features, functions and capabilities to support commercial online (Internet) services and more particularly a sophisticated fee setting tool that allows a developer to assign a system of fees for access to an online service. The fee setting tool allows complex fee arrangements to be created using well defined scripting language. However, it does not describe or suggest a method for the remote display of selected images at selected times to distributed group audiences or an autonomous distribution system and components thereof for use with such method in accordance with the invention.

US Patent 5,937,392 (Alberts) describes an advertising frequency control system specifically designed to control Internet banner advertising. It does not relate to the management of advertisements destined to distributed groups.

European patent application EP 0 967 804 (Anderson et al.) describes a method of selecting, for presentation, one of a plurality of available television programs destined to subscribers using a digital television receiver, the selected television program temporally divided into a commercial portion and a program portion, the commercial portion including a plurality of commercial streams, at least a portion of the commercial streams including indicia of demographic affinity; comparing, to a demographic profile, the indicia of demographic affinity of the commercial streams including indicia of demographic affinity; selecting, for presentation during the commercial portion of the selected television program, a commercial stream having indicia of demographic affinity appropriate to the demographic profile; the selected television program and the selected commercial stream being aligned in a manner enabling a relatively seamless transition between streams. Again, it is destined to individual subscribers rather than to grouped audiences.

A similar system is also described in PCT International publication WO 97/12486 (Slezak). Slezak's interactive multi-media system has a video server for providing a primary on demand video program interleaved with secondary multimedia programming, such as advertising, to an individual subscriber's television set. The system also uses a database for storing information about a viewer and the content of the primary video program. The secondary multimedia programming has a varying content determined by the data contained in the database, and as such, can be changed based upon an individual viewer's demographics in conjunction with the subject matter being displayed by the primary video program. Preferably, the system is accessed via the Internet, wherein the subscriber's house is connected to an Internet head end or node via a cable modem. Again, it is destined to individual subscribers rather than to grouped audiences.

US-A-5 661 516 discloses a system for distributing commercials to households using statistical profiling.

### SUMMARY OF THE INVENTION

### Introduction

A digital distribution control and presentation method and system is designed to offer an end-to-end solution for advertisers, retailers, television networks and other information providers wishing to access, via geographic, demographic and temporal selectors, a diverse network of remotely located electronic multimedia displays of varying format and capacity.

The fundamental concepts behind the "autonomous distribution system" are based upon analysis of the sales and presentation activity in the private multi-media industry. Typical clients for private broadcasts are retail store chains. The electronic content presented in a store chain is organized in a fashion similar to a television channel with content and advertising mixed together. However, while all stores in the chain may wish to have the same informative content, the advertising inserted in the channel may differ from store to store depending upon the stock, traffic and sales activity in a specific location. Thus, the ability to create broadly distributed channels, but with fine-grained differentiation in the advertising content of each channel based upon location or demographics is the goal of advertisers and retailers alike. The autonomous distribution system technology or the invention was designed with this functionality as the target objective.

As a distribution system, the autonomous distribution system is particularly effective at planning the transmission and maintenance of electronic files to globally distributed sites. It could be used by a television network wishing to send varying content (e.g. commercials, local announcements, etc...) to its affiliated stations in different markets.

The system can be broken into four distinct activities:
● Scheduling control and planning
● Transmission planning and performance
● Site presentation and control
● Network monitoring tools and remote access.

Each activity in the system preferably has the following characteristics:
● Completely autonomous standalone functionality
● Optimised planning and implementation for reduced operation costs
● Guarantee of service and active telemetry of system status.

The autonomous distribution system of the invention is based on a client-server architecture involving an independent autonomous Scheduling System connected to a plurality of display sub-systems, through a high bandwidth network which is controlled by a Transmission Control System.

The Scheduling System is also connected to individual workstations through a direct connection or through any appropriate network such as the Internet. Workstation operators can, via the Scheduling System, access the network of display sub-systems using geographic, demographic and temporal selectors to implement advertising and other distribution campaigns. Matrix planning is used to allow multiple campaigns to participate in overlapping sub-sets of display sites on the network.

### Scheduling

Scheduling is performed using three different methods:
● Method 1 (direct): this scheduling method allows workstation operators to access individual display sub-systems and schedule multimedia distribution and presentation at specific times and frequencies.
● Method 2 (play list): this scheduling method causes a display sub-system to cycle through a play list of content.
● Method 3 (coverage): coverage planning is a complex operation involving planning a multimedia campaign involving one or many display sub-systems. The optimisation is performed at two levels; display specific, and inter-display. This optimisation procedure takes into account the following sets of criteria:
   ο A multilevel set of industry-specific conflict detection and avoidance or attraction involving presence and timing of advertising from competing or complementary industry members and conflicting industry interdictions. Conflicts are resolved on one display sub-system or between several display sub-systems in close proximity and even on one specific display screen in those cases where a display sub-system is capable of independently controlling a plurality of display screens. Conflict management may also involve restrictions on specific advertising content at certain locations during certain time periods.
   o Demographic reach targets for audience specification.
   o Multiple methods of optimisation of play list content within a working "day" period (a "day" need not be 24-hours).
   o Optimization of planning and implementation of multiple ads in complex campaigns.
   o Generation of display site list and presentations for multiples sites to achieve campaign targets.
   o Schedule planning for campaigns involving random migration of content on a portion of a targeted subset of the display sub-systems on the network during the campaign. This "roaming" campaign allows greater "first sight" coverage of a targeted demographic/ geographic segment.

The system maintains two sets of scheduling data for each display screen in the network. The first set contains the available air-time "inventory" consisting of the maximum possible advertising time for each display screen. The second data set contains the actual presentation play lists. Since not all inventory is always sold, and the system must not show blank display screens to the audience, the system must translate from the actually sold inventory into the actual presentation schedule while safeguarding the original intention of the advertising campaign. Multiple methods of generating the actual presentation play lists from the inventory actually sold have been developed and implemented:
● Method A - Generate a rotation of content showing exactly the order of content planned, but disregarding the original planned length of the rotation: Thus if one hour of air-time was originally for sale, but only 40 minutes has been sold, then the resultant play list will show a repeating 40 minute loop of unique content.
● Method B - Generate a play list which maintains the original length and placement of the content, but fills in the empty spots in a manner consistent with the original intentions of the advertisers. This method is the most complex and involves filling in the unsold advertising spots with a combination of Public service spots and advertising taken from those advertisers present in the schedule and inserted in priority and proportion to their presence in the sold schedule. Thus an advertiser purchasing 50% of the inventory on a display screen will have a higher priority than one who purchased only 20% of the available space. The unsold space will then be filled in proportion to their purchase and priority. In this way, the system safeguards the original intentions of the advertiser in term of market penetration and presentation priority while maintaining a professional display appearance.

### Workstations

The planning workstations are linked to a Scheduling System and are programmed to allow non-experts to implement complex advertising and information campaigns according to targets previously planned by media specialists. The workstations use an optimised Graphical User Interface (GUI) to assist in the implementation of the campaigns.

The workstations support multiple levels of user privilege ranging from general access to supervisor level control. In this way the system allows multiple levels of verification before campaigns can be implemented on the display sub-systems network.

The campaign planning system (hereinafter the "CPS") is a graphical tool, within the autonomous distribution system workstation interface, used to convert macroscopic Human-oriented advertising objectives into specific display and event schedules. The CPS takes the following factors into account when planning a campaign:
● Demographic goals of campaign.
● Geographic goals of campaign.
● Budgetary restrictions of campaign.
● Industry and presentation timetable restrictions.
● Market Penetration.
● Target audience size.

The CPS functions via an extensive database record maintained for each display screen or channel controlled by the autonomous distribution system. Each database record keeps data on such diverse elements as geographic and demographic groups, industry and timetable exclusions, financial costs and audience traffic patterns.

The workstation program allows the users to monitor the progression and achievement of the goals of specific advertising and information campaigns and the overall network. Complex campaigns and system status indicators are viewed using a 3-dimensional data cube designed to allow surface-type presentation of the activities of large volumes of data, campaigns and display activity.

A specialized web-browser version of the workstation called the "Direct-Access System" or "remote workstation" permits a sub-set of the workstation functionality to be accessible by service and sales operatives in the field. The remote workstations connect to the network via the Internet or other known means. Using this method, no special software is required on the operative's computer to access the Scheduling System.

### Transmission Scheduling and Broadcasting

The Transmission Control System is the communications control hub for the entire system. It is responsible for delivering the content and commands determined by the Scheduling System to the specified set of display sub-systems. The Transmission Control System is responsible for the overall electromechanical health of the network. As such it performs the following tasks:
● Receive content and commands from the Scheduling System.
● Plan and execute an optimized transmission schedule designed to achieve just-in-time delivery of multimedia content at a minimum of cost and a maximum of reliability using whatever means of delivery are available.
● Implement a dynamically shifting multicast/unicast transmission protocol for reduced communications costs and minimized bandwidth.
● Encrypt/decrypt data for enhanced security.
● Receive performance logs and display site telemetry for aggregations and forwarding to the Scheduling System.

The primary data communications mechanism used by the Transmission Control System to communicate with the display sub-systems is preferably via bi-directional VSAT technology using small remote-site dish antennas. However, the Transmission Control System is also capable of using any IP-based transmission technology such as Internet, ISDN and POTS lines.

The heart of the Transmission Control System is the transmission optimizer. This is a specific software solution designed to take in a diverse set of requests for content delivery to specific sites on a IP-based network and generate a transmission schedule which gives the maximum of efficiency and certainty of success, while using the minimum of delivery channel bandwidth. The transmission optimizer of the Transmission Control System allows the implementation of a Just-In-Time delivery over networks of varying topology.

### Display Sub-Systems

The display sub-systems are responsible for implementing the content presentation on the schedule which was previously planned. Each display sub-system comprises one or more display screen(s) (the size and performance characteristics of which will depend on the needs of the site where it is to be installed) and a display control system which receives and stores the data received from the Scheduling System and is adapted to display the images on its associated display screen(s) in accordance with the play list. The display sub-systems preferably have the following characteristics:
● Multi-channel presentation o fmulti-media content such as MPEG-1 and 2 and on-screen overlay of text and graphical images.
● Data reception via VSAT, or other electronic transceiver technology.
● Performance data-logging for transmission of "as-run" performance logs to the Transmission Control System from the display controller system.
● Fully redundant mechanical and electronic operations.
● Operate in either primary or team mode to implement multimedia concepts requiring screen resources greater than one display sub-system can muster. In this way a display sub-system can declare itself "site master" and receive or obtain content and or content location scheduling information for other display sub-systems. The site master will then forward and co-ordinate the activities of the team member display sub-systems.
● An active configuration management protocol is built into the display sub-systems. This protocol allows the units to communicate via IP, RS-232 or other means with industry standard equipment used with display sub-systems to create special effects such as lighting and sound control or video-wall support via synchronisation of the independent video outputs.
● Contains an intelligent content management and acquisition capacity. Due to this capacity, the Scheduling System can function autonomously from the network and distribution management activity. The Scheduling System informs Display Controllers of their required activity. The Display Controllers then analyse the instructions and validate that they possess the resources necessary to perform said activities. If and when a data file is determined to be necessary, the Display Controller is then responsible for requesting the delivery of said file from the Transmission Control System within the available time period. It is this independent pushing of the desired state of the activity at the edge of the network, which in turn generates the pull of content from wherever it may be available that allows the system to be autonomous, efficient and reliable.

The Display Controller can also use the above capabilities to act as a digital content warehouse and communications access point for external sub-systems such as interactive kiosks and hosted applications developed by third parties. The autonomous "push-pull" of the Scheduling-Display-Transmission Control Systems allows the system to be equally efficient and useful for data distribution and maintenance activity as for advertising and digital presentation.

### Network Monitoring Tools and Remote Access

The Scheduling System and the Transmission Control System support remote access for system monitoring and control. Using this mechanism, the following tools are implemented for remote access: main system data concentrator panels, and sales/marketing access programs using connection via the Internet or other known means.

Concentrator panels which are large format graphical displays running on independent computer systems are used in conjunction with each service and transmission center. Each concentrator panel shows the state of the overall system. Two specific types of concentrator panels are used: the network activity monitor and the system status and transmission activity monitor.

The monitoring programs used to update the concentrator panels are capable of operating using direct LAN, Internet or other known connections to the system. This permits the system to be monitored by managers at remote sites using varying equipment.

The sales access programs allow sales and marketing personnel to plan and book time on the system without actually having to prepare content. The reduced bandwidth requirements permit the sales personnel to operate their stations at a customer site using an Internet connection. Each station can present the state of inventory and availability on the system. The sales personnel can begin and plan campaigns, and finally make sales proposals. The system then automatically forwards the instructions to the Scheduling System for the fully trained workstation operators to continue the required operations for implementation using the Scheduling Workstations.

There is, therefore, provided a system in accordance with claim 1.

### DESCRIPTION OF THE DRAWINGS

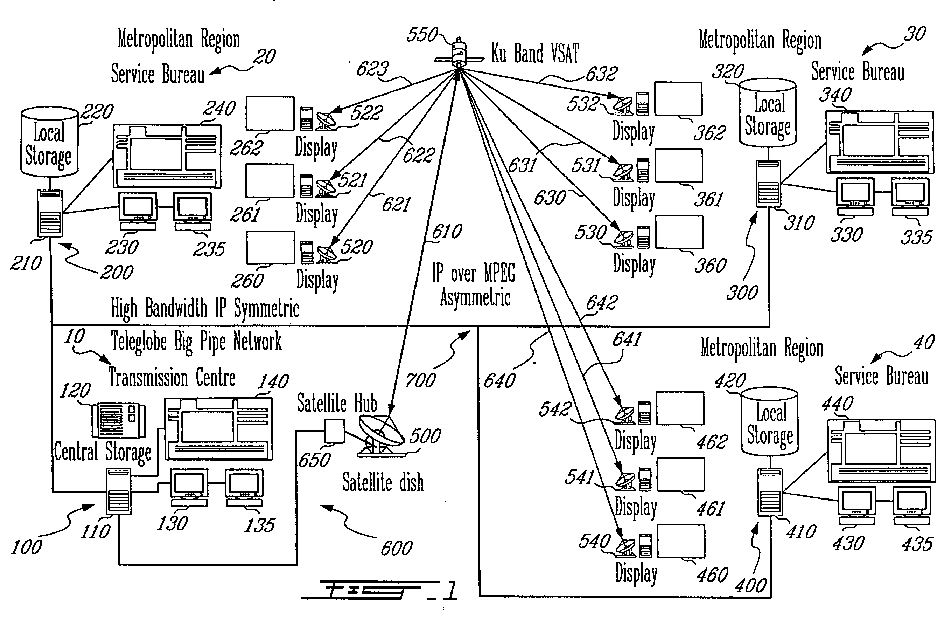

**Figure 1** is a schematic representation of a first embodiment of an autonomous digital presentation system in accordance with the invention. The diagram shows a system involving several service bureaux each containing a Scheduling Server and a plurality of workstations connected via high-speed connection with a Transmission centre containing a Transmission Control System. The Transmission Control System is also connected via a secondary network with a diverse group of display sub-systems each containing one or more display screen(s).

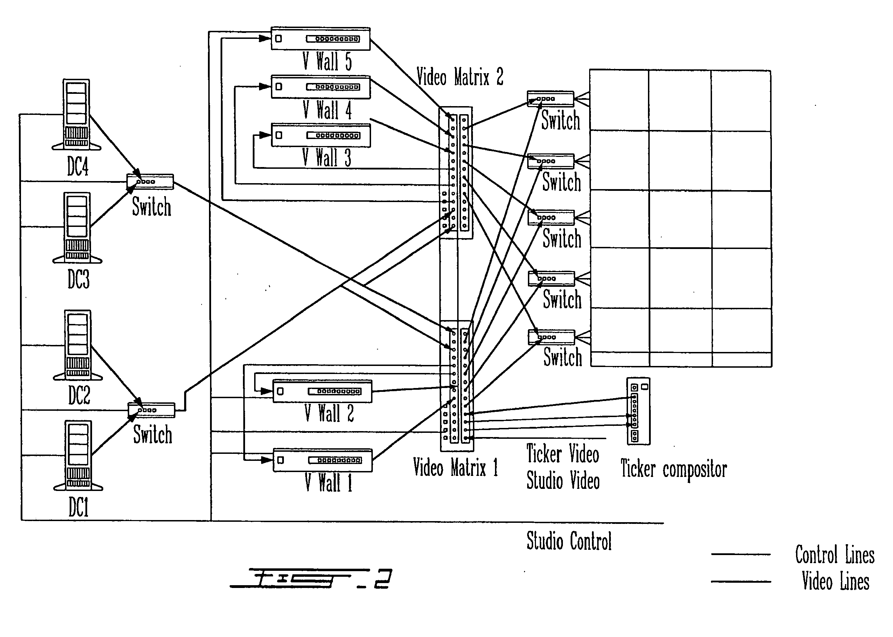

**Figure 2** is a schematic representation of a complex display sub-system which may be used with the invention.

### DETAILED DESCRIPTION OF A PREFERRED EMBODIMENT

The digital presentation system shown in figure 1 comprises a Transmission Centre 10 and several Service Bureaux 20, 30 and 40 all controlling groups of display sub-systems. The Transmission Centre 10 comprises a Transmission Control System 100 comprising a CPU 110 a central storage 120, a first computer screen 130, a second computer screen 135, a large concentrator display panel 140 all connected to the CPU 110.

Similarly, there are provided Service Bureaux each containing Scheduling Servers 200, 300 and 400 respectively, each having a CPU, local storage, multiple workstations and one large concentrator display panel all connected to their respective CPUs 210,310 and 410.

All of the Scheduling Servers are connected via a high bandwidth network for example Teleglobe's high bandwidth network 700. This network of Scheduling Servers form the Scheduling System. Network 700 also connects all Scheduling Servers to the Transmission Control System 100.

A second network 600 connects the Transmission Control System to all the individual display sub-systems 520, 521, 522, 530, 531, 532, 540, 541 and 542 via a satellite dish 500 and a Ku band satellite 550.

Each display sub-system comprises a satellite dish, a CPU, a storage mechanism and at least one display screen adapted to be seen by passers-by.

A single Service Bureau can service a given metropolitan area in which a plurality of display sub-systems can be strategically deployed inside buildings or outside where they may replace traditional billboards.

Demographic data is gathered and inputted in the central storage 120 via workstations 200, 300 and 400. Such demographic data can either be global, for a given metropolitan region and/or specific for each display.

The needs and preferences of each advertiser and information provider who wishes to use the digital presentation system are gathered by the sales personnel and are inputted in the database maintained in the central storage 120 via the workstations and Scheduling Servers. These preferences include demographics, multimedia content, airtime preferences and budgetary constraints. All of these preferences and constraints are entered into the central storage 120 via the Scheduling Servers 200, 300 and 400. Each workstation operator can reserve air time for display sub-systems located in his/for metropolitan area or indeed in any other display sub-system connected to the Transmission Control System 100 via the network 600.

Each workstation operator also has the option of using optimisation software contained in the Scheduling Servers to suggest a schedule to the client which will take into consideration the aforesaid constraints (demographics, content, air time and budget).

Once the schedule is determined, it is inputted into the system which will then prepare a play list or schedule incorporating the needs of all the advertisers and information providers wishing to use each individual display sub-system. As each display performs its broadcast, a detailed log of all the relevant data is kept in the digital presentation system for future reference and to provide evidence to the advertisers and information providers to the effect that each given multimedia content was broadcast at a given site over a precise period of time.

A camera equipped with image recognition software can also be provided at each site and managed by the display sub-system to actually determine the number and characteristics of the actual audience during each broadcast. This information can be used for statistical and even billing purposes.

It is, of course, understood that the invention is not to be limited to the exact details of the representative digital presentation system and components thereof set forth above. A variety of departures from the foregoing disclosure may be made in order to conform to the design preferences or the requirements of each specific application of the invention. It is therefore appropriate that the invention be construed broadly and in a manner of consistent with the fair meaning or proper scope of the claims that follow.

For example, this invention may be used by a television network to schedule commercials or public announcements which are adapted to the needs of each local station.

## Claims

1. A system to control the display of digital multimedia content on a plurality of out-of-home remote visual display systems (260,261,262,361,362,460,461,462) connected together via a broadband network (600), wherein each said visual display system comprises an electronic multimedia display operatively connected to an associated display controller, said electronic multimedia display being arranged to be viewable by a plurality of passers-by, each of said display systems being adapted to cycle through playlists of multimedia content, each of said playlists having a plurality of air time periods and being stored on respective said display controller, said control system comprising:
a. at least one scheduling server (200, 300, 400) operatively connected to said visual display systems, said at least one scheduling server comprising computer processor means (210) and data storage means (220);
b. first means for processing data from a database (10) to determine the availability of said air time periods in each of said playlists located on each said visual display systems;
c. second means for processing data to select and reserve one or more of said available air time periods in one or more of said playlists located on each said respective visual display system to define said playlists;
d. third means for processing data to respectively link to each of said reserved air time periods of each playlist the multimedia content to be displayed by each of said visual display systems during said reserved air time periods, said third means for processing data further including means (10) for transmitting said multi-media content and said playlists to the corresponding one of said visual display systems:
e. fourth means for inputting and storing data related to the multimedia content preferences of each user of a visual display system;
f. fifth means for inputting data related to the air time period preferences of each user in said playlist of a visual display system;
g. sixth means for processing data to determine for each visual display system, the actual playlist by optimally correlating said available playlist air time periods, said air time period preferences, and said multimedia content preferences,such that the displayed data is the result of a repeated cycling of transmitted, received and locally stored content in accordance with at least one of said transmitted or actual playlists.

2. A control system as claimed in claim 1, **characterized in that** each said visual display system further comprises means to request the transmission of said multimedia content or part of said multimedia content if said multimedia content or part of said multimedia content is not available on said storage means.

3. A control system as claimed in claim 1, **characterized in that** it comprises means (230, 235, 330, 335, 430, 435) for inputting and storing demographic data in relation to the geographic location of each visual display system.

4. A control system as claimed in claim 1, wherein said sixth means for processing data comprises:
- means to determine, for each said playlist associated to each visual display system the duration of any unreserved air time period.
- means to fill each said unreserved air time period of said playlist with digital content which is compatible with the remaining multimedia content in the said corresponding predetermined air time period.

5. A control system as claimed in claim 1, wherein said sixth means for processing data comprises:
- means to determine, for each said playlist associated to each visual display system the duration of any unreserved air time period,
- means to remove each said unreserved air time period of said playlist.

6. A control system as claimed in claim 3 further comprising:
- means for inputting and storing data related to the multimedia content preferences of each user of a visual display system;
- means for inputting data related to the air time period preferences of each user in said playlist of a visual display system;
- means for inputting and storing data related to the demographic preferences of each user of a visual display system;
- means for processing data to determine for each visual display system, the actual play list by optimally correlating said available playlist air time periods, said air time period preference, said multimedia content preference, said demographic data and said demographic preferences.

7. A control system as claimed in claim 6, wherein said means for processing data comprises:
- means to determine, for each said playlist associated to each said visual display system the duration of any unreserved air time period;
- means to fill each said unreserved air time period of said playlist with digital content which is compatible with the remaining multimedia content in the said corresponding predetermined air time period.

8. A control system as claimed in claim 6, wherein said means for processing data comprises:
- means to determine, for each said playlist associated to each visual display system the duration of any unreserved air time period,
- means to remove each said unreserved air time period of said playlist.

9. A system as claimed in claim 1, wherein said broadband network is a satellite network.

10. A system as claimed in claim 1, wherein said broadband network is a bi-directional network.

11. A control system as claimed in claim 1, wherein said means for transmitting data comprises a transmission control system connected to the scheduling server and the visual display systems.

## Patentansprüche

1. System zum Steuern der Anzeige von digitalen Multimediainhalten auf einer Mehrzahl von außer Haus positionierten Visualisierungssystemen (260, 261, 262, 361, 362, 460, 461, 462), die miteinander über ein Breitbandnetzwerk (600) verbunden sind, wobei jedes Visualisierungssystem eine elektronische Multimediaanzeige aufweist, die operativ mit einem zugehörigen Anzeigecontroller verbunden ist, die elektronische Multimediaanzeige derart angeordnet ist, dass sie für eine Mehrzahl von Vorübergehenden sichtbar ist und jedes der Visualisierungssysteme Abspiellisten mit Multimediainhalten durchlaufen kann, jede der Abspiellisten eine Mehrzahl von Sendezeitspannen aufweist und jeweils auf dem Anzeigecontroller gespeichert ist, wobei das Steuersystem umfasst:
a. wenigstens einen Planungsserver (200, 300, 400), der operativ mit den Visualisierungssystemen verbunden ist, wobei der wenigstens eine Planungsserver eine Computerverarbeitungseinrichtung (210) .und eine Datenspeichereinrichtung (220) aufweist;
b. eine erste Einrichtung zum Verarbeiten von Daten einer Datenbasis (10) zur Bestimmung der Verfügbarkeit der Sendezeitspannen von jeder der Abspiellisten, die auf jedem der Visualisierungssysteme lokalisiert sind;
c. eine zweite Einrichtung zum Verarbeiten von Daten zum Auswählen und Reservieren von einer oder mehrerer verfügbarer Sendezeitspannen in einer oder mehrerer der auf jedem der zugeordneten Visualisierungssysteme lokalisierten Abspiellisten zur Definition derselben; -
d. eine dritte Einrichtung zum Verarbeiten der Daten zum entsprechenden Verknüpfen des Multimediainhalts mit jeder der reservierten Sendezeitspannen jeder Abspielliste, wobei der Multimediainhalt von jedem der Visualisierungssysteme während der reservierten Sendezeitspannen angezeigt werden soll und die dritte Einrichtung zum Verarbeiten von Daten zusätzlich eine Einrichtung (10) zum Senden des Multimediainhalts und der Abspiellisten zum Jeweiligen der Visualisierungssysteme umfasst;
e. eine vierte Einrichtung zum Einspeisen und Speichern von Daten, die in Bezug zu den Multimediainhaltspräferenzen jedes Nutzers eines Visualisierungssystems stehen;
f. eine fünfte Einrichtung zum Einspeisen von Daten, die in Bezug zu den Sendezeitspannenpräferenzen jedes Nutzers in der Abspielliste eines Visualisierungssystems stehen;
g. eine sechste Einrichtung zum Verarbeiten von Daten zur Bestimmung der gegenwärtigen Abspielliste für jedes Visualisierungssystem durch optimale Korrelation der verfügbaren Abspielliste-Sendezeitspannen, der Sendezeitspannenpräferenzen und der Multimediainhaltspräferenzen, so dass die angezeigten Daten das Ergebnis eines wiederholten Durchlaufens von gesendeten, empfangenen und lokal gespeicherten Inhalten gemäß wenigstens einer der gesendeten oder gegenwärtigen Abspiellisten darstellen.

2. Steuersystem nach Anspruch 1, **dadurch gekennzeichnet, dass** jedes Visualisierungssystem zusätzlich eine Einrichtung zum Anfordern des Sendens des Multimediainhalts oder eines Teils des Multimediainhalts aufweist, falls der Multimediainhalt oder der Teil des Multimediainhalts nicht auf der Speichereinrichtung verfügbar ist.

3. Steuersystem nach Anspruch 1, **dadurch gekennzeichnet, dass** dieses eine Einrichtung (230, 235, 330, 335, 430, 435) zum Einspeisen und Speichern demographischer Daten in Bezug zum geographischen Ort jedes Visualisierungssystems aufweist.

4. Steuersystem nach Anspruch 1, wobei die sechste Einrichtung zum Verarbeiten von Daten aufweist:
- eine Einrichtung zum Ermitteln der Dauer einer beliebigen nicht reservierten Sendezeitspanne für jede der mit jedem der Visualisierungssysteme verknüpften Abspielliste,
- eine Einrichtung zum Füllen der nicht reservierten Sendezeitspanne der Abspielliste mit digitalem Inhalt, der mit dem verbleibenden Multimediainhalt in der zugeordneten, vorgegebenen Sendezeitspanne kompatibel ist.

5. Steuersystem nach Anspruch 1, wobei die sechste Einrichtung zum Verarbeiten von Daten aufweist:
- eine Einrichtung zum Ermitteln der Dauer einer beliebigen, nicht reservierten Sendezeitspanne für jede Abspielliste, die mit jedem Visualisierungssystem verknüpft ist.
- eine Einrichtung zum Entfernen der nicht reservierten Sendezeitspanne der Abspielliste.

6. Steuersystem nach Anspruch 3, zusätzlich umfassend:
- eine Einrichtung zum Einspeisen und Speichern von Daten, die in Bezug zu den Multimediainhaltspräferenzen jedes Nutzers eines Visualisierungssystems stehen;
- eine Einrichtung zum Einspeisen von Daten, die in Bezug zu den Sendezeitspannenpräferenzen jedes Nutzers in der Abspielliste eines Visualisierungssystems stehen;
- eine Einrichtung zum Einspeisen und Speichern von Daten, die in Bezug zu den demographischen Präferenzen jedes Nutzers eines Visualisierungssystems stehen;
- eine Einrichtung zum Verarbeiten von Daten zum Ermitteln der gegenwärtigen Abspielliste für jedes Visualisierungssystem durch optimale Korrelation der verfügbaren Abspielliste-Sendezeitspannen, der Sendezeitspannenpräferenzen, der Multimediainhaltspräferenzen, der demographischen Daten und der demographischen Präferenzen.

7. Steuersystem nach Anspruch 6, wobei die Einrichtung zum Verarbeiten von Daten aufweist:
- eine Einrichtung zum Ermitteln der Dauer einer beliebigen nicht reservierten Sendezeitspanne für jede der mit jedem der Visualisierungssysteme verknüpften Abspielliste,
- eine Einrichtung zum Füllen der nicht reservierten Sendezeitspanne der Abspielliste mit digitalem Inhalt, der mit dem verbleibenden Multimediainhalt in der zugeordneten, vorgegebenen Sendezeitspanne kompatibel ist.

8. Steuersystem nach Anspruch 6, wobei die Einrichtung zum Verarbeiten von Daten aufweist:
- eine Einrichtung zum Ermitteln der Dauer einer beliebigen, nicht reservierten Sendezeitspanne für jede Abspielliste, die mit jedem Visualisierungssystem verknüpft ist,
- eine Einrichtung zum Entfernen jeder nicht reservierten Sendezeitspanne der Abspielliste.

9. System nach Anspruch 1, wobei das Breitbandnetzwerk ein Satellitennetzwerk ist.

10. System nach Anspruch 1, wobei das Breitbandnetzwerk ein bidirektionales Netzwerk ist.

11. Steuersystem nach Anspruch 1, wobei die Einrichtung zum Senden von Daten ein Sendesteuersystem aufweist, das mit dem Planungsserver und den Visualisierungssystemen verbunden ist.

## Revendications

1. Un système pour contrôler l'affichage de contenu multimédia numérique sur une pluralité de systèmes d'affichage non-résidentiels situés à distance (260, 261, 262, 361, 460, 461, 462) connectés ensembles via un réseau à large bande (600), dans lequel chacun desdits systèmes d'affichage comprend un écran d'affichage multimédia électronique connecté à un contrôleur, ledit écran d'affichage multimédia électronique étant disposé de façon à être vu par une pluralité de passants, chacun desdits systèmes d'affichage étant adapté à lire en boucle des listes de lecture de contenu multimédia, chacune desdites listes de lecture comprenant une pluralité de périodes de diffusion et étant respectivement entreposée dans l'un desdits contrôleurs d'affichage, ledit système de contrôle comprenant :
a. au moins un serveur de programmation (200, 300, 400) connecté auxdits systèmes d'affichage, ledit au moins un serveur de programmation comprenant des moyens de traitement informatique (210) et des moyens d'entreposage des données (220);
b. des premiers moyens pour traiter des données d'une banque de données (10) pour déterminer la disponibilité desdites périodes de diffusion dans chacune desdites listes de lecture située sur chacun desdits systèmes d'affichage;
c. des seconds moyens pour traiter des données pour sélectionner et réserver une ou plusieurs desdites périodes de diffusion disponibles dans une ou plusieurs desdites listes de lecture situées respectivement sur chacun desdits systèmes d'affichage afin de définir lesdites listes de lecture;
d. des troisièmes moyens pour traiter des données pour respectivement lier à chacune desdites périodes de diffusion de chacune desdites listes de lecture ledit contenu multimédia qui sera affiché par chacun desdits systèmes d'affichage durant lesdites périodes de diffusion réservées, lesdits troisièmes moyens pour traiter des données comprenant en plus des moyens (10) pour transmettre ledit contenu multimédia et lesdites listes de lecture auxdits systèmes d'affichage correspondants;
e. des quatrièmes moyens pour entrer et entreposer des données relatives aux préférences de contenu multimédia de chaque usager d'un système d'affichage;
f. des cinquièmes moyens pour entrer des données relatives aux préférences des périodes de diffusion de chaque usager dans ladite liste de lecture d'un système d'affichage;
g. des sixièmes moyens pour traiter des données pour déterminer, pour chaque système d'affichage, l'actuelle liste de lecture en corrélant de façon optimale lesdites périodes de diffusion disponibles, lesdites préférences des périodes de diffusion et lesdites préférences de contenu multimédia, de façon à ce que les données affichées soient le résultat d'un lecture en boucle répétée du contenu transmis, reçu et localement entreposé conformément à moins une desdites listes de lecture transmise
ou actuelle.

2. Un système pour contrôler l'affichage tel que revendiqué dans la revendication 1, **caractérisé en ce que** chacun desdits systèmes d'affichage comprend en plus des moyens pour demander la transmission dudit contenu multimédia ou d'une partie dudit contenu multimédia si ledit contenu multimédia ou si ladite partie dudit contenu multimédia n'est pas disponible dans lesdits moyens d'entreposage.

3. Un système pour contrôler l'affichage tel que revendiqué dans la revendication 1, **caractérisé en ce que** ledit système comprend des moyens (230, 235, 330, 335, 430, 435) pour entrer et entreposer des données démographiques en relation avec la position géographique de chacun desdits systèmes d'affichage.

4. Un système pour contrôler l'affichage tel que revendiqué dans la revendication 1, dans lequel lesdits sixièmes moyens pour traiter des données comprennent :
- des moyens pour déterminer, pour chacune desdites listes de lecture associée à chacun desdits systèmes d'affichage, la durée de toutes les périodes de diffusion non-réservées;
- des moyens pour remplir chacune desdites périodes de diffusion non-réservées desdites listes de lecture avec du contenu numérique qui est compatible avec le reste dudit contenu multimédia dans lesdites périodes de diffusion prédéterminées correspondantes.

5. Un système pour contrôler l'affichage tel que revendiqué dans la revendication 1, dans lequel lesdits sixièmes moyens pour traiter des données comprennent :
- des moyens pour déterminer, pour chacune desdites listes de lecture associée à chacun desdits systèmes d'affichage, la durée de toutes les périodes de diffusion non-réservées;
- des moyens pour retirer chacune desdites périodes de diffusion non-réservées desdites listes de lecture.

6. Un système pour contrôler l'affichage tel que revendiqué dans la revendication 3, comprenant en plus :
- des moyens pour entrer et entreposer des données relatives aux préférences de contenu multimédia de chaque usager d'un système d' affichage;
- des moyens pour entrer des données relatives aux préférences des périodes de diffusion de chaque usager dans ladite liste de lecture d'un système d'affichage;
- des moyens pour entrer et entreposer des données relatives aux préférences démographiques de chaque usager d'un système d'affichage;
- des moyens pour traiter des données pour déterminer, pour chacun desdits systèmes d'affichage, l'actuelle liste de lecture en corrélant de façon optimale lesdites périodes de diffusion disponibles, lesdites préférences des périodes de diffusion, lesdites préférences de contenu multimédia, lesdites données démographiques et lesdites préférences démographiques.

7. Un système pour contrôler l'affichage tel que revendiqué dans la revendication 6, dans lequel lesdits moyens pour traiter des données comprennent :
- des moyens pour déterminer, pour chacune desdites listes de lecture associée à chacun desdits systèmes d'affichage, la durée de toutes les périodes de diffusion non-réservées;
- des moyens pour remplir chacune desdites périodes de diffusion non-réservées desdites listes de lecture avec du contenu numérique qui est compatible avec le reste dudit contenu multimédia dans lesdites périodes de diffusion prédéterminées correspondantes.

8. Un système pour contrôler l'affichage tel que revendiqué dans la revendication 6, dans lequel lesdits moyens pour traiter des données comprennent :
- des moyens pour déterminer, pour chacune desdites listes de lecture associée à chacun desdits systèmes d'affichage, la durée de toutes les périodes de diffusion non-réservées;
- des moyens pour retirer chacune desdites périodes de diffusion non-réservées desdites listes de lecture.

9. Un système pour contrôler l'affichage tel que revendiqué dans la revendication 1, dans lequel ledit réseau à large bande est un réseau satellite.

10. Un système pour contrôler l'affichage tel que revendiqué dans la revendication 1, dans lequel ledit réseau à large bande est un réseau bi-directionnel.

11. Un système pour contrôler l'affichage tel que revendiqué dans la revendication 1, dans lequel lesdits moyens pour transmettre des données comprennent un système de contrôle de transmission connecté audit serveur de programmation et auxdits systèmes d'affichage.
